# EUROPEAN PATENT APPLICATION

(11) **EP 4 345 489 A1**
(43) Date of publication of application: **03.04.2024**
(21) Application number: 23198956.7
(22) Date of filing: 22.09.2023
(51) Int. Cl.: G01S 5/02, G01S 5/00, H04W 64/00

(54) **POSITION DETERMINATION**

(30) Priority: 30.09.2022 WO PCT/EP2022/077410
(71) Applicant: Nokia Technologies Oy, 02610 Espoo (FI)
(72) Inventor: HENNINGER, Marcus Roland, 71636 Ludwigsburg (DE); MANDELLI, Silvio, 71634 Ludwigsburg (DE); KEATING, Ryan, Chicago - IL 60622 (US); KELLEY, Sean, Hoffman Estates - IL 60010 (US)
(74) Representative: Nokia EPO representatives

(57) **Abstract**

Examples of the disclosure relate to position determination using one or more reflectors. In examples of the disclosure an apparatus can be configured to transmit information relating to one or more reflectors within a scattering environment to a network apparatus. The information relating to the one or more reflectors can be used by the network apparatus to enable signals reflected from the one or more reflectors to be used for a position determination.

## Description

### TECHNOLOGICAL FIELD

Examples of the disclosure relate to position determination. Some relate to position determination using one or more reflectors.

### BACKGROUND

Position determination is a key enabler of many functions that make use of New Radio (NR). Approaches used for position determination include time of arrival (ToA) or time difference of arrival (TDoA) measurements. TDoA measurements provide the benefit that there is no need for the synchronization of the device to be tracked through the network.

### BRIEF SUMMARY

According to various, but not necessarily all, examples of the disclosure there may be provided an apparatus comprising:
at least one processor; and
at least one memory storing instructions that, when executed by the at least one processor, cause the apparatus at least to perform:
   a transmission of information relating to one or more reflectors within a scattering environment to a network apparatus, wherein the information relating to the one or more reflectors can be used by the network apparatus to enable signals reflected from the one or more reflectors to be used for a position determination.

The information relating to the one or more reflectors may be comprised within a scattering environment information report.

The instructions, when executed by the at least one processor, may cause the apparatus to perform transmission of information relating to one or more of:
a position of the one or more reflectors;
an identifier of the one or more reflectors;
an indication of a type of reflectors of the one or more reflectors;
an indication of a reflecting profile of the one or more reflectors;
information relating to a reconfigurable intelligent surface of the one or more reflectors;
a reflector confidence of the one or more reflectors;
information about one or more other objects in the scattering environment.

The information about the one or more other objects in the scattering environment may facilitate generation of a digital twin of the scattering environment.

The instructions, when executed by the at least one processor, may cause the apparatus to perform a transmission of the information relating to one or more reflectors in response to receiving an indication that information about the scattering environment is requested.

The request for information about the scattering environment may be received from a network apparatus.

The instructions, when executed by the at least one processor, may cause the apparatus to perform a transmission of an enquiry as to whether information relating to the one or more reflectors is requested.

The apparatus may comprise a Transmit/Receive Point (TRP).

According to various, but not necessarily all, examples of the disclosure there may be provided a method comprising: transmitting information relating to one or more reflectors within a scattering environment to a network apparatus, wherein the information relating to the one or more reflectors can be used by the network apparatus to enable signals reflected from the one or more reflectors to be used for a position determination.

According to various, but not necessarily all, examples of the disclosure there may be provided a computer program comprising computer program instructions that, when executed by processing circuitry, causes: transmitting information relating to one or more reflectors within a scattering environment to a network apparatus, wherein the information relating to the one or more reflectors can be used by the network apparatus to enable signals reflected from the one or more reflectors to be used for a position determination.

According to various, but not necessarily all, examples of the disclosure there may be provided an apparatus comprising means for: transmitting information relating to one or more reflectors within a scattering environment to a network apparatus, wherein the information relating to the one or more reflectors can be used by the network apparatus to enable signals reflected from the one or more reflectors to be used for a position determination.

According to various, but not necessarily all, examples of the disclosure there may be provided a network apparatus comprising:
at least one processor; and
at least one memory storing instructions that, when executed by the at least one processor, cause the apparatus at least to perform:
   receiving information relating to one or more reflectors within a scattering environment, wherein the information relating to the one or more reflectors can be used by the network apparatus to enable signals reflected from the one or more reflectors to be used for a position determination.

The information relating to the one or more reflectors may be received in response to an indication from the network apparatus that information about the scattering environment is requested.

The instructions, when executed by the at least one processor, may cause the network apparatus to perform;
a transmission of the received information relating to the one or more reflectors to at least one of:
an access node apparatus;
a User Equipment (UE);
a sensing node.

One or more angle of arrival search windows may be indicated to the at least one of:
an access apparatus;
a User Equipment (UE);
a sensing node.

It may be indicated whether the angle of arrival search window corresponds to one of a line of sight path or a reflected path.

The network apparatus may comprise a management function.

According to various, but not necessarily all, examples of the disclosure there may be provided a method comprising:
receiving information relating to one or more reflectors within a scattering environment, wherein the information relating to the one or more reflectors can be used by the network apparatus to enable signals reflected from the one or more reflectors to be used for a position determination.

According to various, but not necessarily all, examples of the disclosure there may be provided a computer program comprising computer program instructions that, when executed by processing circuitry, causes:
receiving information relating to one or more reflectors within a scattering environment, wherein the information relating to the one or more reflectors can be used by the network apparatus to enable signals reflected from the one or more reflectors to be used for a position determination.

According to various, but not necessarily all, examples of the disclosure there may be provided an apparatus comprising means for: receiving information relating to one or more reflectors within a scattering environment, wherein the information relating to the one or more reflectors can be used by the network apparatus to enable signals reflected from the one or more reflectors to be used for a position determination.

According to various, but not necessarily all, examples of the disclosure there may be provided a node apparatus comprising:
at least one processor; and
at least one memory storing instructions that, when executed by the at least one processor, cause the apparatus at least to perform:
   receiving information relating to one or more reflectors within a scattering environment from a network entity, wherein the information relating to the one or more reflectors can be used by the node apparatus to enable signals reflected from the one or more reflectors to be used for a position determination.

The information relating to the one or more reflectors within a scattering environment may comprise one or more angle of arrival search windows.

It may be indicated whether the angle of arrival search window corresponds to a line of sight path or a reflected path.

The the instructions, when executed by the at least one processor, may cause the node apparatus to perform a position determination using one or more of the angle of arrival search windows.

The instructions, when executed by the at least one processor, may cause the node apparatus to perform beamforming using one or more of the angle of arrival search windows.

The node apparatus may comprise at least one of; an access node, a User Equipment, a sensing node.

According to various, but not necessarily all, examples of the disclosure there may be provided a method comprising:
receiving information relating to one or more reflectors within a scattering environment from a network entity, wherein the information relating to the one or more reflectors can be used by the node apparatus to enable signals reflected from the one or more reflectors to be used for a position determination.

According to various, but not necessarily all, examples of the disclosure there may be provided a computer program comprising computer program instructions that, when executed by processing circuitry, cause:
receiving information relating to one or more reflectors within a scattering environment from a network entity, wherein the information relating to the one or more reflectors can be used by the node apparatus to enable signals reflected from the one or more reflectors to be used for a position determination.

According to various, but not necessarily all, examples of the disclosure there may be provided an apparatus comprising means for: receiving information relating to one or more reflectors within a scattering environment from a network entity, wherein the information relating to the one or more reflectors can be used by the node apparatus to enable signals reflected from the one or more reflectors to be used for a position determination.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example network;
FIG. 2 shows an example scattering environment;
FIG. 3 shows an example method;
FIG. 4 shows an example method;
FIG. 5 shows an example method;
FIGS. 6A and 6B show an example signaling charts;
FIG. 7 show example devices; and
FIG. 8 shows an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DEFINITIONS

- AMF: Access and Mobility management Function
- AoA: Angle of Arrival
- DL: Downlink
- gNB: NR base station
- IE: Information Element
- LMF: Location Management Function
- LoS: Line-of-Sight
- NLoS: Non-Line-of-Sight
- NR: New Radio
- NRPPa: New Radio Positioning Protocol A
- O-RAN: Open-Radio Access Network
- PRS: Position Reference Signal
- PRS- RSRPP: PRS- Reference Signal Received Path Power
- RAN: Radio Access Network
- RIS: Reconfigurable Intelligent Surface
- RSTD: Reference Signal Time Difference
- SIM: Subscriber Identity Module
- SL: Sidelink
- SMF: Session Management Function
- TDoA: Time Difference of Arrival
- ToA: Time of Arrival
- TRP: Transmit Receive Point
- UE: User Equipment
- UL: Uplink
- UPF: User Plane Function

### DETAILED DESCRIPTION

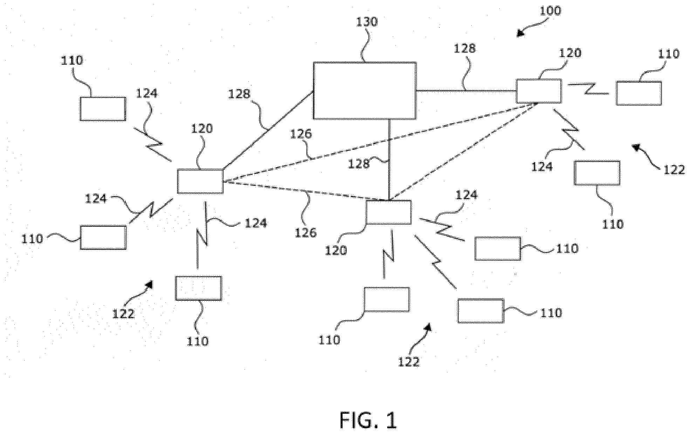

Fig. 1 illustrates an example of a network 100 comprising a plurality of network entities including terminal apparatus 110, node apparatus 120 and one or more network apparatus 130. The terminal apparatus 110 and node apparatus 120 communicate with each other. The one or more network apparatus 130 communicate with the access nodes 120. In some examples the one or more network apparatus 130 communicate with the terminal apparatus 110.

The one or more network apparatus 130 can, in some examples, communicate with each other. The one or more node apparatus 120 can, in some examples, communicate with each other.

The network 100 can be a cellular network comprising a plurality of cells 122 each served by an access node apparatus 120. In this example, the interface between the terminal node apparatus 110 and an access node apparatus 120 defining a cell 122 is a wireless interface 124.

The access node apparatus 120 comprises one or more cellular radio transceivers. The terminal node apparatus 110 comprises one or more cellular radio transceivers.

In the example illustrated the cellular network 100 is a third generation Partnership Project (3GPP) network in which the terminal apparatus 110 are user equipment (UE) and the node apparatus 120 can be access nodes such as base stations.

The term 'user equipment' is used to designate mobile equipment comprising a smart card for authentication/encryption etc. such as a Subscriber Identity Module (SIM). In some examples the term 'user equipment' is used to designate mobile equipment comprising circuitry embedded as part of the user equipment for authentication/ encryption such as software SIM.

The access node apparatus 120 can be any suitable base station. A base station is an access node. It can be a network element responsible for radio transmission and reception in one or more cells to or from the UE 110. The node apparatus 120 can be a network element in a Radio Access Network (RAN), an Open-Radio Access Network (O-RAN) or any other suitable type of network.

The access node apparatus 120 can comprise one or more Transmit/Receive Points (TRPs). The TRP can comprise any suitable components within an access node apparatus 120 that can be used to transmit and/or receive signals. In some examples an access node apparatus 120 might have only TRP functionality.

The network apparatus 130 can be part of a core network. The network apparatus 130 can be configured to manage functions relating to connectivity for the UEs 110. For example, the network apparatus 130 can be configured to manage functions such as connectivity, mobility, authentication, authorization and/or other suitable functions. In some examples the network apparatus 130 can comprise an Access and Mobility management Function (AMF) and/or a User Plane Function (UPF) and/or a Location Management Function (LMF) and/or a Session Management Function (SMF) or any other suitable entities.

In the example of Fig. 1 the network apparatus 130 is shown as a single entity. In some examples the network apparatus 130 could be distributed across a plurality of entities. For example, the network apparatus 130 could be cloud based or distributed in any other suitable manner.

The network 100 can be a 4G or 5G network, for example. It can for example be a New Radio (NR) network that uses gNB or eNB as access nodes 120. New Radio is the 3GPP name for 5G technology. In such cases the access node apparatus 120 can comprise gNodeBs (gNBs) 120 configured to provide user plane and control plane protocol terminations towards the UE 110 and/or to perform any other suitable functions. The gNBs 120 are interconnected with each other by means of an X2/Xn interface 126. The gNBs are also connected by means of the N2 interface 128 to the network apparatus 130. The gNBs can be connected to an AMF or any other suitable network apparatus 130. Other types of networks and interfaces could be used in other examples. Other types of network 100 could comprise next generation mobile and communication network, for example, a 6G network.

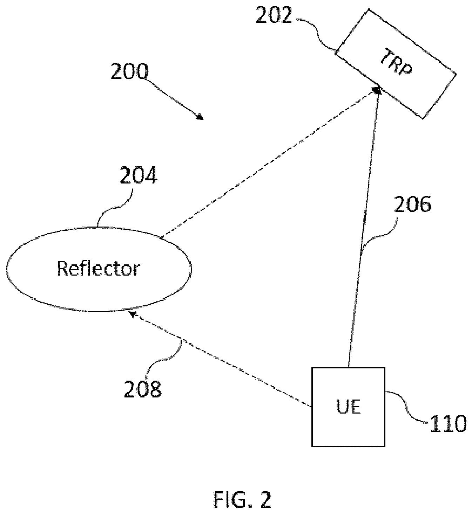

In some examples the network 100 can comprise one or more scattering environments. Fig. 2 schematically shows an example scattering environment 200.

A scattering environment 200 is an environment, for example the network 100 or a part of the network 100, in which the signals between the respective entities 110,120,130 are reflected or scattered. The signals can be reflected or scattered from one or more reflectors. The reflection or scattering of the signals means that the signals received by the respective entities are not necessarily being received by a line-of-sight path or by a single path. In a scattering environment the signals being received by the respective entities could be received by multiple paths.

The example scattering environment of Fig. 2 comprises a UE 110, a TRP 202 and a reflector 204. The UE 110 can be a UE 110 as shown in Fig. 1 and described above. The TRP 202 could be part of gNB 120 or any other suitable network entity. Only one TRP 202 is shown in Fig. 2 for illustration purposes. In implementations of the disclosure more TRPs 202 would be used to determine the UE 110 position.

The reflector 204 could be any object within the communication environment from which signals can be reflected or scattered. The reflector 204 could comprise one or more reflective surfaces from which signals can be reflected or scattered.

In some examples the reflector 204 could be configurable so that the reflection and/or scattering of the signals can be controlled. For instance, the reflector 204 could comprise a Reconfigurable Intelligent Surface (RIS) or any other suitable means. In some examples the reflectors 204 might not be configurable.

In some examples the reflector 204 could comprise a passive reflector. The passive reflector might not provide any cellular functions. The passive reflector might reflect or scatter signals without any other function being performed on them. For instance, the reflectors could comprise objects such as walls, buildings or trees or any other suitable type of object that is part of the general environment and not necessarily intended for cellular communications.

In some examples the reflectors 204 could be stationary so that they do not move within the scattering environment 200. In some examples the reflectors 204 could be moving within the scattering environment 200. For instance, a car or other type of vehicle could provide the function of a reflector 204.

In the example of Fig. 2 the UE transmits an Uplink (UL) signal to the TRP 202. Due to the presence of the reflector 204 the TRP 202 receives the UL signal via two paths 206, 208.

The first path 206 is indicated by the solid arrow in Fig. 2. The first path 206 is a direct path. The first path 206 is a line-of-sight path. In the first path 206 there is no reflection from the reflector 204.

The second path 208 is indicated by the dashed arrow in Fig. 2. The second path 208 is an indirect path. The second path 208 is not a line-of-sight path. In the second path 208 there is a reflection from the reflector 204.

An LMF or other suitable network apparatus 130 can be configured to determine a position of the UE 110. The LMF can use the signals received via the first path 206 for a position determination by using standard methods and processes. The LMF cannot easily use the signals received via the second path 208 for a position determination because the LMF is not aware of the location of the reflector 204. If the LMF does not know the position of the reflector 204 then the LMF may disregard and neglect signals received by the second path 208. The signals received by the second path 208 will be delayed and weaker compared to signals received via the first path 206.

Also if the LMF does not know the position of the reflector 204 then a gNB cannot be configured to scan the directions from which the reflected signals are expected to arrive and/or apply appropriate beamforming techniques.

The example of Fig. 2 shows an UL case in which the UE 110 transmits and the gNB 120 makes the measurements. The above mentioned problems and the examples of the disclosure that address these problems also apply to the downlink (DL) case, where the gNB 120 transmits and the UE 110 makes the measurements.

Examples of the disclosure comprise signaling procedures that can be used to enable reflected signals to be used for position determination. The examples of the disclosure could be implemented in scattering environments 200 as shown in Fig. 2 or in any other suitable scenario.

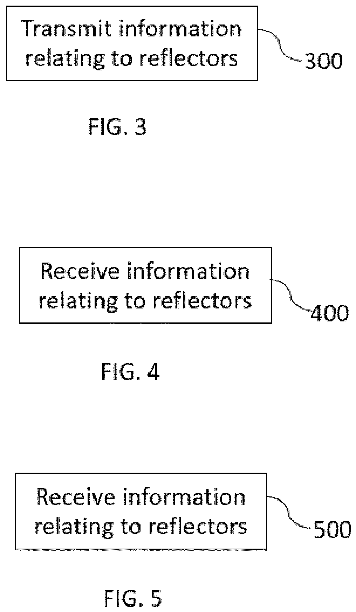

Fig. 3 shows an example method. The method can be performed by an apparatus that can be configured to collect information relating to reflectors 204 within a scattering environment. The apparatus could be a client device such as a TRP or any other suitable type of apparatus. A TRP that is configured to perform the method of Fig. 3 could appear as a gNB 120 in the 3GPP architecture but does not need to provide cellular services to UEs 110.

The method of Fig. 3 comprises, at block 300, transmitting information relating to one or more reflectors 204 within a scattering environment 200. The information relating to the one or more reflectors 204 can be transmitted to a network apparatus 130. The network apparatus 130 could comprise a management function such as an LMF or any other suitable entity.

The information relating to the reflectors 204 can be used by the network apparatus 130 to enable signals reflected from the reflectors 204 to be used for a position determination.

The information relating to the reflectors 204 can be provided in any suitable format. In some examples the information relating to the reflectors 204 can be comprised within a scattering environment information report.

In some examples the information relating to the reflectors 204 can comprise information relating to the position of the reflector 204. The position information can be provided as global coordinates or could be provided in any other suitable format.

In some examples the information relating to the reflectors 204 can comprise an identifier of the reflectors 204. The identifier can comprise any information that enables respective reflectors 204 to be uniquely identified with respect to each other.

In some examples the information relating to the reflectors 204 can comprise an indication of a type of reflectors 204 for the respective reflectors within the scattering environment. The type of reflector 204 could comprise information about the type of object or entity that is acting as the reflector 204. For instance, the reflector 204 could be a special-shape passive reflector, a passive RIS or any other suitable type of reflector 204.

The indication of the type of reflectors 204 could be made using any suitable means. In some examples an enumeration field could be provided with in a scattering information report, or any other suitable message. The enumeration field could comprise a value that represents a particular type of reflectors 204.

In some examples the information relating to the reflectors 204 can comprise an indication of a reflecting profile of the one or more reflectors 204. The reflecting profile can comprise information that indicates how a signal would be reflected by the reflector 204. This information could comprise the angles at which the signals would be reflected, the extent to which the signals would be reflected and/or any other suitable information.

In some examples the reflecting profile can comprise a list of angles and an associated reflection coefficient for the respective angles.

In some examples the reflecting profile can comprise a maximum gain azimuth angle and/or a maximum gain elevation angle, a loss in dB at one or more respective angular offsets, and the angular offsets required to have the indicated losses.

Various properties of the reflector 204 can affect the reflecting profile of a reflector 204. For instance, the shape of the surfaces of the reflector 204 will determine the angles at which signals are reflected and the types of materials that are used for the reflective surface can determine the amount of signal that is reflected. In some examples the reflectors 204 can be designed to have a particular reflecting profile. In such examples, the reflectors 204 can be designed with a particular shape and can have a material with a selected refractive index on the surface.

If the reflectors 204 comprise an RIS then the information relating to the reflector 204 can comprise information relating to the RIS. The information relating to the RIS can comprise information indicating whether the RIS is turned on or off, information relating to an operating mode of the RIS, or any other suitable information. The information relating to the operating mode of the RIS could indicate is the RIS is configured for reflection, absorption, focusing/collimation or any other mode. The RIS information could be provided in an optional field in any suitable messages.

In some examples the information relating to the reflectors 204 can comprise a reflector confidence of the reflectors 204. The reflector confidence can be a value or parameter that indicates the level of confidence that the reflector 204 exists and/or the level of confidence in the accuracy of the position of the reflector 204. The highest value for this parameter would be equivalent to having perfect location knowledge for the reflector 204. This would mean that the expected error on its location, defined as a measure of the error, is zero. The lower the reflector confidence value, the higher the expected error is.

In some examples the information relating to the reflectors 204 can comprise information about one or more other objects in the scattering environment 200. The other objects in the scattering environment 200 could comprise other objects that affect the signal paths. For example, it could comprise objects that could reflect the signal paths or any other type of object. The objects do not need to have been designed or intended for signal reflection. For instance, the objects could comprise walls or trees or other objects that don't provide any network functions.

Other types of information relating to the reflector 204 could be provided in some examples of the disclosure. For instance, if one or more of the reflectors is moving then information about the speed and trajectory could be provided or updated position information could be provided.

The information about the one or more other objects in the scattering environment 200 can facilitate generation of a digital twin of the scattering environment 200. The digital twin can be a virtual representation of the scattering environment 200. In some examples sensing operations can be used to generate the digital twin.

When the network apparatus 130 receives information about the other objects within the scattering environment 200 the network apparatus 130 can decide whether to use any of these objects as reflectors 204 for reflecting or scattering the signals. Once the network apparatus 130 has received the information about the other objects then the network apparatus 130 also knows where to look, or which angles to scan, to enable the reflected signals to be measured reliably.

In some examples the method could comprise blocks that are not shown in Fig. 3. For instance, in some examples of the disclosure the transmission of the information relating to one or more reflectors 204 can occur in response to receiving an indication that information about the scattering environment 200 is requested or needed. In such examples, prior to the transmission of the information relating to the reflectors 204 a request for information about the scattering environment 200 is received. The request can be received from the network apparatus 130 or from any other suitable entity.

In some examples the method could comprise a transmission of an enquiry as to whether information relating to the one or more reflectors 204 is requested or needed. In such cases the client device or other suitable device could transmit the enquiry to the network apparatus 130 or to any other suitable entity. In response to the enquiry as to whether information relating to the reflectors 204 is requested or needed the client device could receive a message indicating whether or not the information is requested or needed. The transmission of the information relating to the one or more reflectors 204 could then be performed based on whether or not the information is requested or needed.

In some examples rather than transmit requests to identify whether or not the information relating to the reflectors 204 is requested or needed the client device could transmit the information relating to the reflectors 204 at periodic intervals.

Fig. 4 shows another example method. The method can be performed by a network apparatus 130. The network apparatus 130 can be configured to perform position determinations. The network apparatus 130 could comprise a management function such as an LMF or any other suitable function.

The method of Fig. 4 comprises, at block 400, receiving information relating to one or more reflectors 204 within a scattering environment 200. The information relating to the reflectors 204 can be used by the network apparatus 103 to enable signals reflected from the one or more reflectors 204 to be used for a position determination.

The information relating to the reflectors 204 could be received from any suitable network entity. In some examples the information relating to the reflectors 204 could be received from a client device such as TRP or any other suitable network entity. The device that sends the information relating to the reflectors 204 could be configured to perform the method of claim 3.

The information relating to the reflectors 204 could comprise a scattering environment report. The information relating to the reflectors 204 could comprise position information, identifier information, an indication of a type of reflectors, an indication of a reflecting profile, information relating to an RIS, reflector confidence information, information about one or more other objects in the scattering environment 200, and/or any other suitable information.

In some examples the method could comprise blocks that are not shown in Fig. 4. For instance, in some examples of the disclosure information relating to the one or more reflectors 204 can be received in response to an indication from the network apparatus 130 that information about the scattering environment 200 is requested or needed. In such cases the network apparatus 130 could transmit a request for information about a scattering environment 200 to client devices or other suitable entities. The request can then trigger the client devices to send the information.

In some examples the method could also comprise transmitting the received information relating to the reflectors 204 or a subset of the information relating to the reflectors or information derived from the information relating to the reflectors 204 to one or more node apparatus within the network 100. The node apparatus could be an access node apparatus 120, a UE 110, a sensing node or any other suitable node apparatus.

The information derived from the information relating to the reflectors 204 could comprise an Angle of Arrival (AoA) search window, an indication whether the AoA search windows corresponds to a line-of-sight path or a reflected path, and/or any other relevant information.

Fig. 5 shows another example method. The method can be performed by a node apparatus. The node apparatus can be an access node apparatus 120, a UE 110, a sensing node or any other suitable node apparatus.

The method of Fig. 5 comprises, at block 500, receiving information relating to one or more reflectors 204 within a scattering environment 200. The information relating to the reflectors 204 can be received from a network entity 130. The information relating to the reflectors 204 can be used by the node apparatus to enable signals reflected from the one or more reflectors 204 to be used for a position determination.

The information relating to the one or more reflectors within a scattering environment can comprise information indicating one or more AoA search windows. The AoA search windows can comprise an angular range from which signals could be received by the node apparatus. The information can also indicate whether or not the signals received within the AoA windows are received via a line-of-sight path or via a reflected path.

In some examples the method could comprise blocks that are not shown in Fig. 5. For instance, in some examples of the disclosure the node apparatus can be configured to perform a position determination using one or more of the AoA search windows. In some examples the node apparatus can be configured to perform beamforming using one or more of the AoA search windows.

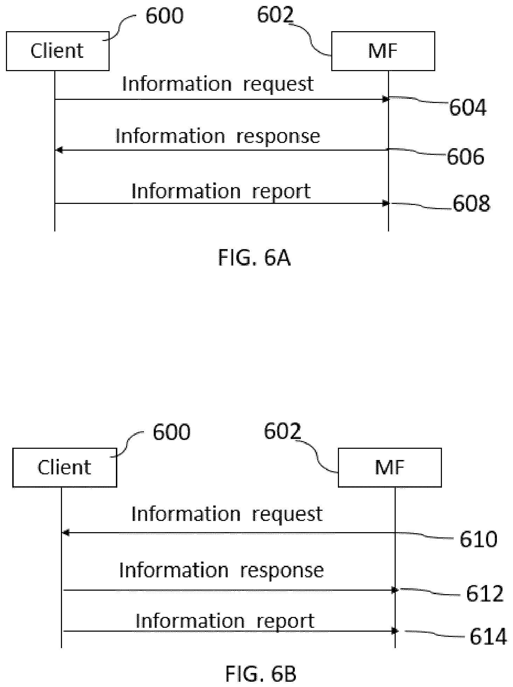

Figs. 6A and 6B shows an example signaling chart that can be used in examples of the disclosure. The signaling chart shows signals that can be transmitted between a client device 600 and a management function (MF) 602. The signals could be transmitted using New Radio Positioning Protocol A (NRPPa) or any other suitable protocol.

The client device 600 can be any network entity that can be configured to collect information about the reflectors 204 in a scattering environment 200. The client device 600 can be a TRP or any other suitable type of apparatus. A TRP that is configured to collect the information about the reflectors 204 in a scattering environment 200 could appear as a gNB 120 in the 3GPP architecture but does not need to provide cellular services to UEs 110.

The MF 602 can be a network apparatus 130 or part of a network apparatus 130. The MF could be an LMF or any other suitable MF.

In the example of Fig. 6A it is assumed that the MF 602 is not aware of the client device 600. In this case the client device 600 announces their presence or existence to the MF 602.

In the example of Fig. 6A, at block 604 the method comprises transmitting an information request from the client 600 to the MF 602. The information request comprises an enquiry as to whether information relating to the reflectors 204 and/or the scattering environment 200 is requested or needed.

In response to the information request the MF 602 sends, at block 606, the information response. The information response comprises a request from the MF 602 for information about the reflectors 204 and/or the scattering environment 200.

In response to the information response the client 600 sends, at block 608, the information report. The information report is sent if the information response indicates that the information is requested.

The information report comprises information about the one or more reflectors 204 and/or the scattering environment 200. The information about the reflectors 204 could comprise information as described herein, and/or could comprise any other suitable information. The information can be provided in any suitable format.

Once the information about the one or more reflectors 204 and/or the scattering environment 200 has been received by the MF 602 the information can be used to enable a position determination. For example, the information could be used to define AoAs for one or more node apparatus.

Other methods for enabling the transmission of the information about the one or more reflectors 204 and the scattering environment 200 by the client 600 could be used in some examples of the disclosure. For instance, in some cases, instead of querying whether the information is needed periodic reports comprising the information about the one or more reflectors 204 and the scattering environment 200 could be transmitted. In this case blocks 604 and 606 would not be needed.

Fig. 6B shows another example signaling chart between a client device 600 and an MF 602. In the example of Fig. 6B it is assumed that the client device 600 is known to the MF 602. In this case the client device could be a gNB or other suitable type of node apparatus. In this case the request can be initiated by the MF 602 rather than by the client device 600. In this case the client device 600 does not need to announce their presence or existence to the MF 602.

In the example of Fig. 6B, at block 610, the method comprises transmitting an information request from the MF 602 to the client 600. The information request 610 comprises a request from the MF 602 for information about the reflectors 204 and/or the scattering environment 200.

In response to the information request 610 the client 600 sends, at block 612, the information response. The information response can comprise an acknowledgement that the requested information can be provided. The information response may include the information report or the information report can be sent, from the client 600 to the MF 602 at block 614. In some examples the information report can update previously reported information.

Table 1 shows example information that could be included in a scattering information report. Table 1 shows an Information Element (IE) that can be used to transmit the information. The IE can be a modification of a TRP information IE that is used in current protocols. The table shows the addition of the TRP type reflector. This enables a TRP to be identified as a reflector 204 and enables a new type of TRP to be used within the communications environments. This TRP would not need to provide any other cellular functionality. This IE could be used in examples where a TRP that doesn't provide any cellular services collects the information about the reflectors. The IE could be used as an extension to an existing protocol rather than requiring a new signaling protocol.

The MF can extract the information about the reflector 204 from the fields of the table. The information could be the geographical coordinates of the reflector 204 or an identification of the reflector 204 or any other suitable information. In some examples the TRP Information IE could be further extended by additional fields that comprise other information that could be included in a scattering environment information report. Such information could comprise types of reflectors, RIS information, reflector confidence and/or any other suitable information.

**Table 1**

| **IE/Group Name** | **Presence** | **Range** | **IE Type and Reference** | **Semantics Description** | **Criticality** | **Assigned Criticality** |
|---|---|---|---|---|---|---|
| TRP ID | M | | 9.2.24 | | - | |
| **TRP Information Type** | | *1* .. *<maxnoT RPInfoTyp es>* | | | - | |
| >CHOICE *TRP Information Item* | M | | | | - | |
| >>NR PCI | M | | INTEGER (0..1007) | NR Physical Cell ID | - | |
| >>NR CGI | M | | 9.2.9 | | - | |
| >>NR ARFCN | M | | INTEGER (0..3279165) | | - | |
| >>PRS Configuration | M | | 9.2.44 | | - | |
| >>SSB Information | M | | 9.2.54 | | - | |
| >>SFN Initialisation Time | M | | Relative Time 1900 9.2.36 | | - | |
| >>Spatial Direction information | M | | 9.2.45 | | - | |
| >>Geographical Coordinates | M | | 9.2.46 | | - | |
| >>TRP type | M | | ENUMERATED (prs-only-tp, srs-only-rp, tp, rp, trp..., ***reflector***) | TS 38.305 [18] | YES | reject |
| >>On-demand PRS TRP Information | M | | 9.2.65 | | YES | reject |
| >>TRP Tx TEG Association | M | | 9.2.79 | | YES | reject |
| >>TRP Beam Antenna Information | M | | 9.2.82 | | YES | reject |

It can be assumed that the node apparatus such as gNBs 120 and UEs 110 are not aware of the reflectors 204. Therefore, after the process shown in Fig. 6 has been completed, the MF 602 has to convey the information that it has received relating to the reflectors 204 to the relevant node apparatus. This can then enable the node apparatus to perform appropriate measurements and position determinations. For example, if the information is sent to a gNB 120 this can enable the gNB 120 scan in the directions that reflected signals could be received from and apply appropriate beamforming techniques. Without the information about the reflectors 204 the gNBs 120 would not know where to scan and so the reflected signals might not be detectable.

The information relating to the reflectors 204 can be conveyed from the MF 602 to the node apparatus in any suitable form and using any suitable protocols. In some examples, the MF 602 could define an AoA search window. In examples of the disclosure the MF 602 could define multiple AoA search windows. The defining of the multiple AoA search windows takes into account that signals can be received by multiple paths due to the presence of the reflectors 204. This can enable the node apparatus to search for signals received via both a line-of-sight path and by one or more indirect paths.

The MF 602 can also indicate whether the AoA corresponds to a signal being received via a direct path or via an indirect path. Informing the node apparatus as to whether an AoA corresponds to a signal being received via a direct path or via an indirect path enables the node apparatus to correctly implement position procedures and/or other functions. For instance, if a node apparatus knows that a respective AoA search window corresponds to an indirect signal path then the node apparatus can also try look for a direct path and potentially report it. The node apparatus would not be able to do this if they did not know that the AoA corresponded to an indirect path. Also if the node apparatus is not aware that a reflection can be expected from a respective AoA the node apparatus could disregard measurements made using that AoA due to their lower received power and quality compared to a direct signal.

Table 2 shows an excerpt of an example measurement request that could be used to enable information about multiple AoAs to be conveyed from the MF 602 to one or more node apparatus. In this example an Additional AoA Search Window Information List is included. An example of an Additional AoA Search Window Information List is shown in table 3. The Additional AoA Search Window Information List can comprise multiple AoA Assistance Information lEs. In this example the number of AoA Assistance Information lEs that can be included is limited to *maxnoExtPath.* These examples show UL assistance information. Corresponding examples could be used for DL cases.

**Table 2**

| | | | | | | | | |
|---|---|---|---|---|---|---|---|---|
| **TRP Measurement Request List** | | | | 1 | | | YES | reject |
| | >**TRP Measurement Request Item** | | | *1..<maxno ofMeasTR Ps*> | | | EACH | reject |
| | | >>TRP ID | M | | 9.2.24 | | - | |
| | | >>Search Window information | O | | 9.2.26 | | - | |
| | | >>Cell ID | O | | NR CGI 9.2.9 | The Cell ID of the TRP identified by the *TRP ID* IE. | YES | ignore |
| | | >>AoA Search Window information | O | | UL-AoA Assistance information 9.2.66 | | YES | ignore |
| | | >>Number of TRP Rx TEGs | O | | ENUMERATED (2, 3, 4, 6, 8, ...) | | YES | ignore |
| | | >>Number of TRP RxTx TEGs | O | | ENUMERATED (2, 3, 4, 6, 8, ...) | | YES | ignore |
| | | >>Additional AoA Search Window information List | O | | 9.2.x | | | |

**Table 3**

| **IE/Group Name** | | **Presence** | **Range** | | **IE Type and Reference** | **Semantics Description** |
|---|---|---|---|---|---|---|
| **Additional AoA Search Window Information Item** | | | *1.. <maxno ExtPath>* | | | |
| | > UL-AoA Assistance information | M | | | 9.2.66 | |
| | | | | | | |

| | **Range bound** | | | **Explanation** | | |
|---|---|---|---|---|---|---|
| | maxnoExtPath | | | Maximum no. of additional path measurement. Value is 8. | | |

Examples of the disclosure also enable the MF 602 to convey information indicating whether or not the AoA is for a signal received via a direct path or for a signal received via an indirect path. Signals received by the direct path would be Line-of-Sight (LoS) signals and the signals received by the indirect paths would be Non-Line-of Sight (NLoS) signals. Table 4 shows an example table that could be used to convey this information. In this example an AoA assistance Information IE is augmented with an enumeration field indicating whether the AoA corresponds to a LoS path or a NLoS path. These examples show UL assistance information. Corresponding examples could be used for DL cases.

**Table 4**

| **IE/Group Name** | | | | **Presence** | **Range** | **IE Type and Reference** | **Semantics Description** |
|---|---|---|---|---|---|---|---|
| CHOICE *AngleMeasurement* | | | | M | | | |
| | >*Expected UL Angle of Arrival* | | | | | | |
| | | **>>Expected Azimuth AoA** | | | 1 | | Defined as (ϕ_{AOA} - Δϕ_{AOA}/2, ϕ_{AOA} + Δϕ_{AOA}/2) |
| | | | >>>Expected Azimuth AoA Value | M | | INTEGER(0..3599) | ϕ_{AOA} component of Expected Azimuth AoA |
| | | | >>>Expected Azimuth AoA Uncertainty Range | M | | INTEGER(0..3599) | Δϕ_{AOA} component of Expected Azimuth AoA |
| | | **>>Expected Zenith AoA** | | | *0..1* | | Defined as (θ_{ZOA} - Δθ_{ZOA}/2, θ_{ZOA} + Δθ_{ZOA}/2) |
| | | | >>>Expected Zenith AoA Value | M | | INTEGER(0..1799) | θ_{ZOA} component of Expected Zenith AoA |
| | | | >>>Expected Zenith AoA Uncertainty Range | M | | INTEGER(0..1799) | Δθ_{ZOA} component of Expected Zenith AoA |
| | >*Expected UL Angle of Arrival Zenith Only* | | | | | | Defined as (θ_{ZOA} - Δθ_{ZOA}A/₂ θ_{ZOA} + Δθ_{ZOA}/2) |
| | | >>Expected Zenith AoA Value | | M | | INTEGER(0..1799) | θ_{ZOA} component of Expected Zenith AoA |
| | | >>Expected Zenith AoA Uncertainty Range | | M | | INTEGER(0..1799) | Δθ_{ZOP} component of Expected Zenith AoA |
| LCS to GCS Translation | | | | O | | 9.2.69 | If absent, the azimuth and zenith are provided in GCS. |
| LoS/NLoS Indicator | | | | O | | ENUMERATED (LoS,NLoS,...) | Indicates, whether expected angles correspond to LoS or NLoS path |

The examples above provide examples for an UL scenario where the AoA information is provided from the MF 602 to a gNB 120. Corresponding procedures could also be used for the DL scenario where the AoA information is provided from the MF 602 to a UE 110 or a sensing node.

Known protocols enable an MF 602 to indicate an expected angle (DL-AoA/DL-AoD) as part of the assistance data. This assistance data could be extended with information comprising a list of additional expected angles. The MF 602 can provide the list of additional expected angles to indicate a desire for the UE 110 or sensing node to measure for signals from one or more reflectors 204.

How the MF 602 indicates the list of additional expected angles can be dependent upon whether or not the UE 110 or sensing node has knowledge of its orientation. If the UE 110 or sensing node has knowledge of its orientation then the MF 602 can indicate the list of additional expected angles using a global coordinate system. If the UE 110 or sensing node does not have knowledge of its orientation then the MF 602 can indicate the list of additional expected angles in a relative fashion using a suitable point of reference. The suitable point of reference could be the direct path or any other suitable reference.

Once the UE 110 or the sensing node has received the list of additional expected angles the UE 110 or the sensing node can use this information to make timing and/or angle measurements. In some examples the UE 110 or sensing node could report to the network 100 if it determines that a given measurement is believed to come from a reflected signal. The UE 110 or the sensing node can use the AoA/relative AoA information along with the expected angles of the signals to determine if a measurement comes from a reflected signal. The UE 110 or sensing node could use this procedure to indicate reflection information for Reference Signal Time Difference (RSTD), Position reference Signal - Reference Signal Received Path Power (PRS-RSRPP), UE Rx-Tx time difference measurements, or DL-AoA or any other suitable measurements.

The examples described above are for Uu based positioning where a gNB 120 and UE 110 are involved. The concept and procedures can be generalized for a sidelink (SL) scenario as well. For the SL case the procedure can happen between two or more UEs 110 which could be communicating direction and could be involved in a positioned session together. In the SL procedure some UEs 110 could be aware of mapping information (for example, V2X UEs) which can be helpful to identify reflectors 204 in the environment.

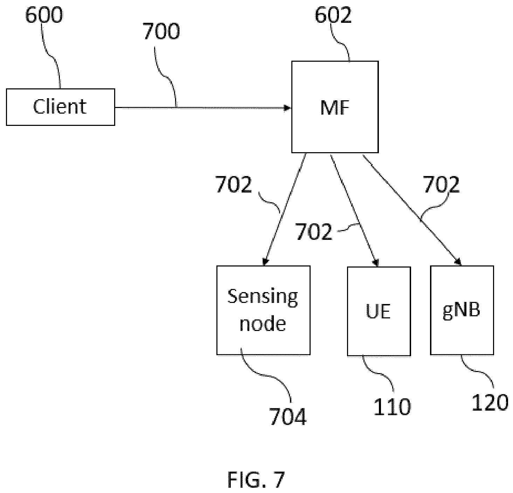

Fig. 7 schematically shows example devices that can be used to implement examples of the disclosure. The device comprises a client 600 and an MF 602 and a plurality of different node apparatus.

The client device 600 can comprise any device that can be configured to collect information about reflectors 204 and/or to collect any other suitable information about a sensing environment 200. In some examples the client device 600 can comprise a TRP. The TRP could appear as a gNB 120 in the 3GPP architecture but does not need to provide cellular services to UEs 110.

The client device 600 is configured to send reflector information 700 to the LMF 602. The reflector information 700 can comprise any suitable information relating to the reflectors 204 and/or the scattering environment 200. The reflector information 700 could comprise a scattering environment information report. The reflector information 700 could comprise information as described herein or could describe any other suitable information.

The MF 602 is a network apparatus 130. Other types of network apparatus 130 could be used in other examples.

The MF 602 is configured to receive the reflector information 700. This can enable the reflector information 700 to be used for a position determination. This can enable the MF 602 to know the location of the reflectors 204 and so enable reflected signals to be used for TDoA measurements or any other suitable positioning processes.

The MF 602 can also send information relating to the position of the reflectors 204 to the node apparatus.

In this example the node apparatus comprises a UE 110, a gNB 120 and a sensing node 704. These are shown for illustrative purposes. Other types of node apparatus could be used in other examples. The sensing nodes 704 could be any apparatus that can be configured to sense information about the environment and report this information back to the network 100. The sensing node 704 could be part of the internet of things or any other suitable type of network. The sensing node 704 could be configured to communicate with a gNB 120 and/or a UE 110 and/or any other suitable devices.

The information that is sent from the MF 602 to the node apparatus can comprise AoA information 702. The AoA information can comprise an angular range that the node apparatus can search for signals. The AoA information can include an indication as to whether signals received within a given AoA are direct or reflected signals. The AoA information 702 can be determined based on the reflector information 700 that has been received by the LMF 602.

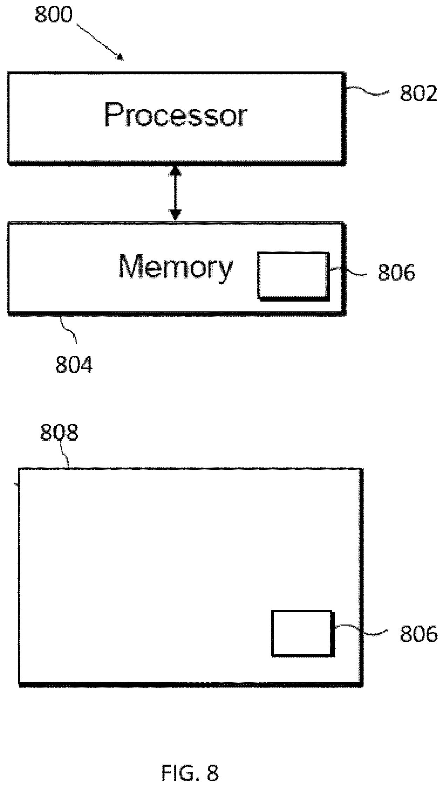

Fig. 8 illustrates an example of a controller 800. The controller 800 could be provided within an apparatus such as node apparatus 120, 110 or a network apparatus 130 or any other suitable type of apparatus. Implementation of a controller 800 may be as controller circuitry. The controller 800 may be implemented in hardware alone, have certain aspects in software including firmware alone or can be a combination of hardware and software (including firmware).

As illustrated in Fig. 8 the controller 800 can be implemented using instructions that enable hardware functionality, for example, by using executable instructions of a computer program 806 in a general-purpose or special-purpose processor 802 that may be stored on a computer readable storage medium (disk, memory etc.) to be executed by such a processor 802.

The processor 802 is configured to read from and write to the memory 804. The processor 802 may also comprise an output interface via which data and/or commands are output by the processor 802 and an input interface via which data and/or commands are input to the processor 802.

The memory 804 stores a computer program 806 comprising computer program instructions (computer program code) that controls the operation of the apparatus when loaded into the processor 802. The computer program instructions, of the computer program 806, provide the logic and routines that enables the apparatus to perform the methods illustrated in the Figs. The processor 802 by reading the memory 804 is able to load and execute the computer program 806.

In examples where the controller 800 is provided within an apparatus the controller 800 therefore comprises: at least one processor 802; and at least one memory 804 including computer program code 806, the at least one memory 804 storing instructions that, when executed by the at least one processor 802, cause a TRP at least to perform:
a transmission 300 of information relating to one or more reflectors 204 within a scattering environment 200 to a network apparatus, wherein the information relating to the one or more reflectors 204 can be used by the network apparatus to enable signals reflected from the one or more reflectors 204 to be used for a position determination.

In examples where the controller 800 is provided within a network apparatus 130 the controller 800 therefore comprises: at least one processor 802; and at least one memory 804 including computer program code 806, the at least one memory 804 storing instructions that, when executed by the at least one processor 802, cause a network apparatus 130 at least to perform:
receiving 400 information relating to one or more reflectors 204 within a scattering environment 200, wherein the information relating to the one or more reflectors 204 can be used by the network apparatus to enable signals reflected from the one or more reflectors 204 to be used for a position determination.

In examples where the controller 800 is provided within a node apparatus 110, 120 the controller 800 therefore comprises: at least one processor 802; and at least one memory 804 including computer program code 806, the at least one memory 804 storing instructions that, when executed by the at least one processor 802, cause a node apparatus 110, 120 at least to perform:
receiving 500 information relating to one or more reflectors 204 within a scattering environment 200 from a network entity, wherein the information relating to the one or more reflectors 204 can be used by the node apparatus to enable signals reflected from the one or more reflectors 204 to be used for a position determination.

The computer program 806 may arrive at the apparatus or network apparatus via any suitable delivery mechanism 808. The delivery mechanism 808 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 806. The delivery mechanism may be a signal configured to reliably transfer the computer program 806. The apparatus may propagate or transmit the computer program 806 as a computer data signal.

The computer program 806 can comprise computer program instructions for causing an apparatus to perform at least the following or for performing at least the following:
a transmission 300 of information relating to one or more reflectors 204 within a scattering environment 200 to a network apparatus, wherein the information relating to the one or more reflectors 204 can be used by the network apparatus to enable signals reflected from the one or more reflectors 204 to be used for a position determination.

The computer program 806 can comprise computer program instructions for causing a network apparatus 130 to perform at least the following or for performing at least the following:
receiving 400 information relating to one or more reflectors 204 within a scattering environment 200, wherein the information relating to the one or more reflectors 204 can be used by the network apparatus to enable signals reflected from the one or more reflectors 204 to be used for a position determination.

The computer program 806 can comprise computer program instructions for causing a node apparatus 120, 110 to perform at least the following or for performing at least the following:
receiving 500 information relating to one or more reflectors 204 within a scattering environment 200 from a network entity, wherein the information relating to the one or more reflectors 204 can be used by the node apparatus to enable signals reflected from the one or more reflectors 204 to be used for a position determination.

The computer program instructions may be comprised in a computer program, a non-transitory computer readable medium, a computer program product, a machine readable medium. In some but not necessarily all examples, the computer program instructions may be distributed over more than one computer program.

Although the memory 804 is illustrated as a single component/circuitry it may be implemented as one or more separate components/circuitry some or all of which may be integrated/removable and/or may provide permanent/semi-permanent/ dynamic/cached storage.

Although the processor 802 is illustrated as a single component/circuitry it may be implemented as one or more separate components/circuitry some or all of which may be integrated/removable. The processor 802 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The stages illustrated in Figs. 3 to 6 can represent steps in a method and/or sections of code in the computer program 806. The illustration of a particular order to the blocks does not necessarily imply that there is a required or preferred order for the blocks and the order and arrangement of the block may be varied. Furthermore, it can be possible for some blocks to be omitted.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for transmitting information to a network apparatus, said information relating to one or more reflectors within a scattering environment, wherein the information relating to the one or more reflectors can be used by the network apparatus to enable signals reflected from the one or more reflectors to be used for a position determination.

2. The apparatus according to claim 1, wherein the information relating to the one or more reflectors is comprised within a scattering environment information report.

3. The apparatus according to any preceding claim further comprising means for transmitting information relating to one or more of:
a position of the one or more reflectors;
an identifier of the one or more reflectors;
an indication of a type of reflectors of the one or more reflectors;
an indication of a reflecting profile of the one or more reflectors;
information relating to a reconfigurable intelligent surface of the one or more reflectors;
a reflector confidence of the one or more reflectors;
information about one or more other objects in the scattering environment.

4. The apparatus according to claim 3 wherein the information about the one or more other objects in the scattering environment facilitates generation of a digital twin of the scattering environment.

5. The apparatus according to any preceding claim further comprising means for performing a transmission of the information relating to one or more reflectors in response to receiving an indication that information about the scattering environment is requested.

6. The apparatus according to any preceding claim further comprising means for transmitting of an enquiry as to whether information relating to the one or more reflectors is requested.

7. An apparatus as claimed in any preceding claim wherein the apparatus comprises a Transmit/Receive Point (TRP).

8. A method comprising:
transmitting information relating to one or more reflectors within a scattering environment to a network apparatus, wherein the information relating to the one or more reflectors can be used by the network apparatus to enable signals reflected from the one or more reflectors to be used for a position determination.

9. A network apparatus comprising means for receiving information relating to one or more reflectors within a scattering environment, wherein the information relating to the one or more reflectors can be used by the network apparatus to enable signals reflected from the one or more reflectors to be used for a position determination.

10. The network apparatus according to claim 9 further comprising means for transmitting of the received information relating to the one or more reflectors to at least one of:
an access node apparatus;
a User Equipment (UE);
a sensing node.

11. A method comprising:
receiving information relating to one or more reflectors within a scattering environment, wherein the information relating to the one or more reflectors can be used by the network apparatus to enable signals reflected from the one or more reflectors to be used for a position determination.

12. A node apparatus comprising means for receiving information relating to one or more reflectors within a scattering environment from a network entity, wherein the information relating to the one or more reflectors can be used by the node apparatus to enable signals reflected from the one or more reflectors to be used for a position determination.

13. The node apparatus according to claim 12 wherein the information relating to the one or more reflectors within a scattering environment comprises one or more angle of arrival search windows.

14. A method comprising:
receiving information relating to one or more reflectors within a scattering environment from a network entity, wherein the information relating to the one or more reflectors can be used by the node apparatus to enable signals reflected from the one or more reflectors to be used for a position determination.

15. A computer program comprising computer program instructions that, when executed by processing circuitry, cause:
receiving information relating to one or more reflectors within a scattering environment from a network entity, wherein the information relating to the one or more reflectors can be used by the node apparatus to enable signals reflected from the one or more reflectors to be used for a position determination.
